(19) **Europäisches Patentamt**
**European Patent Office**
**Office européen des brevets**

(11) **EP 4 263 146 B1**

(12) **FASCICULE DE BREVET EUROPEEN**

(45) Date de publication et mention
de la délivrance du brevet:
**18.12.2024 Bulletin 2024/51**

(21) Numéro de dépôt: **21851677.1**

(22) Date de dépôt: **15.12.2021**

(51) Classification Internationale des Brevets (IPC):
**B25J 9/00** *(2006.01)*     **B25J 9/16** *(2006.01)*
**A61H 1/02** *(2006.01)*     **A61H 3/00** *(2006.01)*

(52) Classification Coopérative des Brevets (CPC):
**B25J 9/0006; A61H 1/0262; A61H 3/00;**
**B25J 9/1615;** A61H 2201/0157; A61H 2201/0176;
A61H 2201/018; A61H 2201/1207;
A61H 2201/1246; A61H 2201/1409;
A61H 2201/149; A61H 2201/1642;
A61H 2201/5007; A61H 2201/5012;
A61H 2201/5028;                      (Cont.)

(86) Numéro de dépôt international:
**PCT/FR2021/052335**

(87) Numéro de publication internationale:
**WO 2022/129784 (23.06.2022 Gazette 2022/25)**

(54) **PROCÉDÉ DE MISE EN MOUVEMENT D'UN EXOSQUELETTE**

VERFAHREN ZUM BEWEGEN EINES EXOSKELETTS

METHOD FOR MOVING AN EXOSKELETON

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **16.12.2020 FR 2013340**

(43) Date de publication de la demande:
**25.10.2023 Bulletin 2023/43**

(73) Titulaire: **Wandercraft**
**75004 Paris (FR)**

(72) Inventeurs:
- **RISBOURG, Fanny**
**75004 Paris (FR)**
- **BUONDONNO, Gabriele**
**75004 Paris (FR)**
- **MOLLÉRO, Roch**
**75004 Paris (FR)**
- **BROSSETTE, Stanislas**
**75004 Paris (FR)**
- **BOÉRIS, Guilhem**
**75004 Paris (FR)**

(74) Mandataire: **Regimbeau**
**20, rue de Chazelles**
**75847 Paris Cedex 17 (FR)**

(56) Documents cités:
**EP-A1- 2 497 610**

- **CARON STEPHANE ET AL: "Stair Climbing
Stabilization of the HRP-4 Humanoid Robot using
Whole-body Admittance Control", 2019
INTERNATIONAL CONFERENCE ON ROBOTICS
AND AUTOMATION (ICRA), IEEE, 20 May 2019
(2019-05-20), pages 277 - 283, XP033594324, DOI:
10.1109/ICRA.2019.8794348**
- **LI ZHIJUN ET AL: "Physical Human-Robot
Interaction of a Robotic Exoskeleton By
Admittance Control", IEEE TRANSACTIONS ON
INDUSTRIAL ELECTRONICS, IEEE SERVICE
CENTER, PISCATAWAY, NJ, USA, vol. 65, no. 12,
1 December 2018 (2018-12-01), pages 9614 - 9624,
XP011687822, ISSN: 0278-0046, [retrieved on
20180730], DOI: 10.1109/TIE.2018.2821649**

**(Cont. page suivante)**

(52) Classification Coopérative des Brevets (CPC):
(Cont.)
A61H 2201/5064; A61H 2201/5071;
A61H 2205/106; A61H 2205/12; G05B 2219/40305

**Description**

DOMAINE TECHNIQUE GENERAL

La présente invention concerne le domaine des robots bipèdes tels que les robots humanoïdes et les exosquelettes.

Plus précisément, elle concerne un procédé de mise en mouvement d'un exosquelette à contrôleur d'admittance.

ETAT DE L'ART

Récemment, sont apparus pour les personnes avec des problèmes de mobilité importants comme les paraplégiques des dispositifs de marche assistée appelés exosquelettes, qui sont des dispositifs robotisés externes que l'opérateur (l'utilisateur humain) vient « enfiler » grâce à un système d'attaches qui lie les mouvements de l'exosquelette de ses propres mouvements. Les exosquelettes de membres inférieurs disposent de plusieurs articulations, généralement au moins au niveau des genoux et des hanches, pour reproduire le mouvement de marche. Des actionneurs permettent de mouvoir ces articulations, qui à leur tour font se mouvoir l'opérateur. Un système d'interface permet à l'opérateur de donner des ordres à l'exosquelette, et un système de commande transforme ces ordres en commande pour les actionneurs. Des capteurs viennent généralement compléter le dispositif.

Ces exosquelettes constituent une avancée par rapport aux fauteuils roulants, car ils permettent aux opérateurs de se remettre debout et de marcher. Les exosquelettes ne sont plus limités par les roues et peuvent théoriquement évoluer dans la majorité des environnements non-plats : les roues, au contraire des jambes, ne permettent pas de franchir des obstacles importants comme des marches, escaliers, obstacles d'une hauteur trop importante, etc.Les procédés connus de contrôle d'exosquelettes permettent d'effectuer une marche stable et autonome sur sol « régulier », c'est-à-dire plan (abusivement on parle de sol plat, mais on entend un sol exempt d'irrégularités, par exemple en intérieur ou sur un tapis de course) et de résister à des perturbations extérieures mineures. On pourra par exemple citer les documents Towards Restoring Locomotion for Paraplégies: Realizing Dynamically Stable Walking on Exoskeletons, T. Gurriet *et al.,* ou Feedback Control of an Exoskeleton for Paraplégies: Toward Robustly Stable, Hands-Free Dynamic Walking, O. Harib *et* al; EP 2 497 610 A1 ; CARON STEPHANE ET AL: "Stair Climbing Stabilization of the HRP-4 Humanoid Robot using Whole-body Admittance Control"; LI ZHIJUN ET AL: "Physical Human-Robot Interaction of a Robotic Exoskeleton By Admittance Control".

Cependant, cela ne permet ni de résister à de fortes perturbations ni de marcher sur un sol non plat tel qu'on peut en trouver en milieu urbain avec des rues pavées par exemple. Dans de telles circonstances, l'exosquelette pourrait chuter et blesser l'utilisateur.

Pour pouvoir se mouvoir dans de tels environnements, il est nécessaire d'utiliser des méthodes de contrôle actif permettant de réagir aux perturbations afin de maintenir l'équilibre de l'exosquelette tout en continuant la marche, mais jusque-là rien de satisfaisant n'a été proposé et on continue d'être obligé de devoir utiliser un portique pour retenir l'exosquelette au cas où il chuterait.

Il serait souhaitable de disposer d'une nouvelle solution de mise en mouvement de tout exosquelette, qui permette de manière fiable et ergonomique la marche de l'exosquelette sur n'importe quel terrain, y compris irrégulier.

PRESENTATION DE L'INVENTION

La présente invention se rapporte ainsi selon un premier aspect à un procédé de mise en mouvement d'un exosquelette bipède recevant un opérateur humain, le procédé comprenant la mise en oeuvre par des moyens de traitement de données de l'exosquelette, d'étapes de :

(a) obtention d'une trajectoire élémentaire théorique de l'exosquelette ;
(b) exécution d'une boucle de contrôle définissant l'évolution d'une position réelle de l'exosquelette de sorte à mettre en oeuvre une trajectoire élémentaire réelle voisine de ladite trajectoire élémentaire théorique, comprenant à chaque itération de la boucle :

- Estimation d'un état courant de l'exosquelette en fonction de ladite position réelle ;
- Détermination d'un torseur d'effort à appliquer à l'exosquelette à l'itération suivante de la boucle pour compenser une déviation entre ledit état courant estimé de l'exosquelette et un état attendu de l'exosquelette conformément à ladite trajectoire élémentaire théorique ;

la détermination du torseur d'effort et/ou son application à l'exosquelette prenant en compte un modèle de flexibilité de l'exosquelette par rapport à un robot rigide.

Selon des caractéristiques avantageuses et non limitatives

Le procédé comprend la répétition des étapes (a) et (b) de sorte à faire marcher l'exosquelette par une succession de trajectoires élémentaires réelles correspondant chacune à un pas.

La trajectoire élémentaire théorique obtenue à l'étape (a) part d'une position initiale, l'étape (b) comprenant la détermination d'une position finale de l'exosquelette à la fin de ladite trajectoire élémentaire réelle, ladite position finale étant utilisée comme position initiale à l'occurrence suivante de l'étape (a).

L'étape (b) comprend, au début de chaque itération de la boucle, l'application à l'exosquelette dudit torseur d'effort déterminé à l'itération préalable au moyen d'un contrôleur d'admittance.

La détermination d'un torseur d'effort à appliquer à l'exosquelette pour compenser la déviation entre ledit état courant estimé de l'exosquelette et un état attendu de l'exosquelette conformément à ladite trajectoire élémentaire théorique comprend la mise en oeuvre d'un contrôle de rétroaction sur au moins un paramètre définissant l'état de l'exosquelette.

La position de l'exosquelette est définie par un vecteur des positions articulaires des degrés de liberté actionnés de l'exosquelette, l'état de l'exosquelette étant défini par au moins un paramètre choisi parmi les positions, vitesses et accélérations des degrés actionnés, les positions et vitesses d'un Centre de Masse, CoM, d'une composante divergente de mouvement, DCM, la position d'un Centre de Pression, CoP, et la position d'un Point de moment zéro, ZMP ; en particulier défini par les positions du Centre de Masse, CoM, de la composante divergente de mouvement DCM et du Centre de Pression CoP.

Ledit contrôle de rétroaction est mis en oeuvre sur la position du DCM.

Ledit torseur d'effort à appliquer à l'exosquelette 1 est défini par une position du CoP.

Ledit torseur d'effort à appliquer à l'exosquelette 1 est déterminé en ajoutant à la position attendue du CoP conformément à ladite trajectoire élémentaire théorique au moins un terme sur l'erreur entre les positions courante estimée et attendue du CoP, et un terme sur l'erreur entre les positions courante estimée et attendue du DCM, en particulier conformément à la formule $z = z_d - \left(1 + \frac{K_p}{\omega}\right) e_\xi - K_i \int e_\xi + \frac{K_d}{\omega} e_z$, où $z_d$ est la position attendue du CoP conformément à ladite trajectoire élémentaire théorique, $e_\xi$ et $e_z$ les erreurs entre les positions courante estimée et attendu respectivement du CoP et du DCM, et $K_p$, $K_i$ et $K_d$ des gains.

Ledit modèle de flexibilité définit une modification de la position attendue du CoP utilisée pour déterminer le torseur d'effort.

L'exosquelette présente au moins un degré de liberté actionné flexible, ledit modèle de flexibilité définissant un offset à appliquer sur une position et/ou une vitesse cible dudit degré de liberté actionné flexible déterminée suite à l'application du torseur d'efforts.

Ledit modèle de flexibilité définit au moins un paramètre de l'état de l'exosquelette à remplacer par une valeur moyenne constatée sur des marches réelles stables.

Ledit modèle de flexibilité est prédéterminé expérimentalement, à partir de marches réelles stables et/ou de simulations.

Selon un deuxième aspect, l'invention concerne un exosquelette comprenant des moyens de traitement de données configurés pour mettre en oeuvre un procédé selon le premier aspect de mise en mouvement de l'exosquelette.

Selon un troisième aspect, l'invention concerne un système comprenant un serveur et l'exosquelette selon le deuxième aspect, le serveur comprenant des moyens de traitement de données configurés pour générer ladite trajectoire élémentaire théorique et la fournir à l'exosquelette à l'étape (a).

Selon un quatrième et un cinquième aspect, l'invention concerne un produit programme d'ordinateur comprenant des instructions de code pour l'exécution d'un procédé selon le premier aspect de mise en mouvement d'un exosquelette ; et un moyen de stockage lisible par un équipement informatique sur lequel un produit programme d'ordinateur comprend des instructions de code pour l'exécution d'un procédé selon le premier aspect de mise en mouvement d'un exosquelette.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'un exosquelette utilisé par les procédés selon l'invention ;

- la figure 2 est un schéma d'une architecture pour la mise en oeuvre des procédés selon l'invention ;
- la figure 3 est un diagramme illustrant un mode de réalisation préféré du procédé selon l'invention ;
- la figure 4 représente schématiquement la boucle de contrôle utilisée dans un mode de réalisation préféré du procédé selon l'invention.

## DESCRIPTION DETAILLEE

### Architecture

La présente invention propose un procédé de mise en mouvement d'un exosquelette 1.

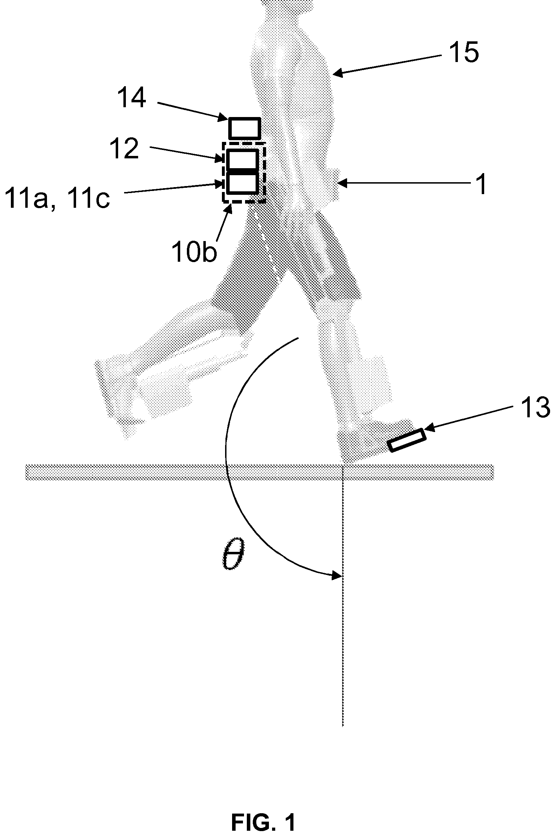

En référence à la **Figure 1,** ledit exosquelette 1 est un système mécanique articulé de type dispositif robotisé bipède, actionné et commandé, pourvu de deux jambes, accueillant plus précisément un opérateur humain présentant ses membres inférieurs chacun solidaires d'une jambe de l'exosquelette 1 (notamment grâce à des sangles). Il peut ainsi être un robot plus ou moins humanoïde. La « mise en mouvement » se traduit en pratique par en appui alternatif sur les jambes, en position debout, de sorte à produire un déplacement. Il s'agit le plus souvent d'une marche, en particulier vers l'avant, mais ce peut être en pratique n'importe quel mouvement, y compris en arrière, latéralement, un demi-tour, une assise, un lever, etc.

Comme l'on verra plus loin, on suppose qu'un mouvement de l'exosquelette est composé d'une séquence de trajectoires élémentaires telles que des pas, chaque pas voyant un pied se décoller du sol puis se reposer, avant inversion des rôles (i.e. une alternance de pas du pied gauche et du pied droit). Par pas on entend tout déplacement d'un pied pour n'importe quel mouvement.

L'exosquelette 1 présente une pluralité de degrés de liberté, c'est-à-dire d'articulations mobiles (généralement via une rotation) les unes par rapport aux autres, qui sont chacun soit « actionné », soit « non-actionné ».

Un degré de liberté actionné désigne une articulation pourvue d'un actionneur commandé par des moyens de traitement de données 11c, c'est-à-dire que ce degré de liberté est contrôlé et que l'on peut agir dessus. Au contraire un degré de liberté non actionné désigne une articulation dépourvue d'actionneur, c'est-à-dire que ce degré de liberté suit sa propre dynamique et que les moyens de traitement de données 11 n'ont pas de contrôle direct dessus (mais a priori un contrôle indirect via les autres degrés de liberté actionnés).

Le présent exosquelette comprend naturellement au moins deux degrés de liberté actionnés, préférentiellement une pluralité. Comme l'on verra, certains de ces degrés de liberté peuvent être « flexibles ».

Les moyens de traitement de données 11c désignent un équipement informatique (typiquement un processeur, soit externe si l'exosquelette 1 est « télécommandé » mais préférentiellement embarqué dans l'exosquelette 1, voir plus loin) adapté pour traiter des instructions et générer des commandes à destination des différents actionneurs. Ces derniers peuvent être électriques, hydrauliques, etc.

La présente demande ne sera limitée à aucune architecture d'exosquelette 1, et on prendra l'exemple tel que décrit dans les demandes WO2015140352 et WO2015140353.

Ainsi, de façon préférée et conformément à ces demandes, l'exosquelette 1 comprend sur chaque jambe une structure de pied comprenant un plan de support sur lequel un pied d'une jambe de la personne portant l'exosquelette peut venir en appui.

Ce plan de support comprend par exemple une plate-forme avant et une plate-forme arrière, telles qu'une liaison pivot pied relie la plate-forme avant à la plate-forme arrière, en constituant un degré de liberté non actionné.

L'homme du métier saura toutefois adapter le présent procédé à toute autre architecture mécanique.

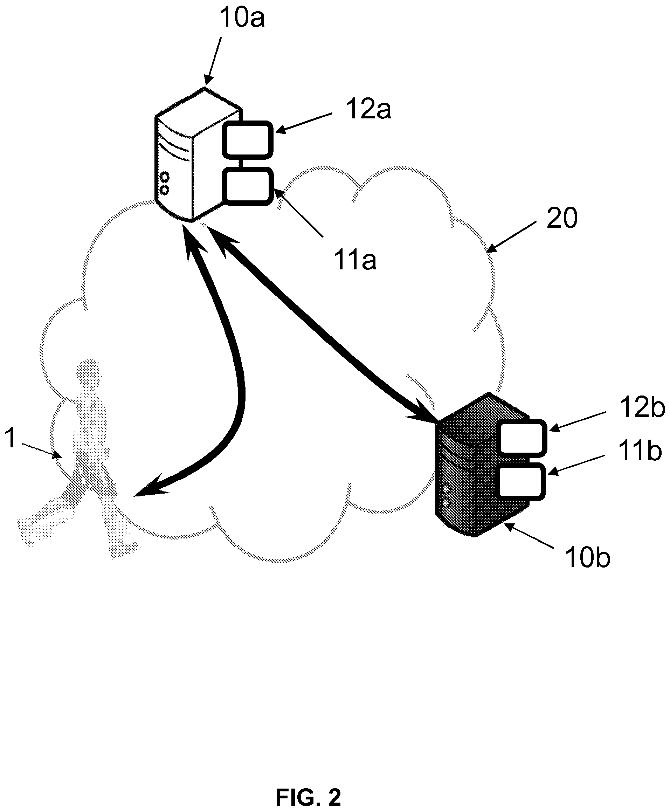

Selon un mode de réalisation préféré, le présent procédé de génération de trajectoire et de marche peuvent impliquer un premier voire un deuxième serveur 10a, 10b au sein d'une architecture telle que représentée par la **Figure 2.**

Le premier serveur 10a est un serveur de génération de trajectoire, et le deuxième serveur 10b est un éventuel serveur d'apprentissage.

En effet, la génération d'une trajectoire de l'exosquelette 1 peut utiliser un réseau de neurone, en particulier de type « à propagation avant » (FNN, « Feedforward Neural Network »), comme cela est proposé dans la demande FR1910649. Le deuxième serveur 10b est alors un serveur pour la mise en oeuvre d'un procédé d'apprentissage de paramètres dudit réseau de neurones. A noter que le présent procédé n'est pas limité à l'utilisation d'un réseau de neurones, et on pourra utiliser toute technique connue de génération de la trajectoire dans sa globalité, voire plus loin.

Dans tous les cas, il est tout à fait possible que ces deux serveurs soient confondus, mais en pratique le deuxième serveur 10b est le plus souvent un serveur distant alors que le premier serveur 10a peut être embarqué par l'exosquelette 1 pour fonctionnement en temps réel, comme cela est représenté par la figure 2. Selon un mode de réalisation préféré, le premier serveur 10a met en oeuvre le procédé de génération d'une trajectoire de l'exosquelette 1 grâce à un réseau de neurones utilisant les paramètres récupérés depuis le second serveur 10b, et l'exosquelette 1 applique normalement directement ladite trajectoire générée in situ pour se mettre en mouvement.

Chacun de ces serveurs 10a, 10b est typiquement un équipement informatique relié à un réseau étendu 20 tel que le réseau internet pour l'échange des données, même si en pratique une fois le réseau de neurone appris et embarqué sur le deuxième serveur 10b la communication peut être interrompue, du moins par intermittence. Chacun comprend des moyens de traitement de données 11a, 11b de type processeur (en particulier les moyens de traitement de données 11b du deuxième serveur ont une forte puissance de calcul, car l'apprentissage est long et complexe par rapport à la simple utilisation du réseau de neurones appris), et le cas échéant des moyens de stockage de données 12a, 12b telle qu'une mémoire informatique, par exemple un disque dur. Dans le cas d'une génération de trajectoire par réseau de neurones, une base de données d'apprentissage peut être stockée par la mémoire 12b du deuxième serveur 10b.

On comprendra qu'il peut y avoir une pluralité d'exosquelettes 1 embarquant chacun leur premier serveur 10a (qui peut alors être de puissance et d'encombrement limité, dans la mesure où il ne génère de trajectoires que pour l'exosquelette 1 auquel il est dédié), ou bien une pluralité d'exosquelettes 1 connectés chacun à un premier serveur 10a plus puissant et éventuellement confondu avec le second serveur 10b (et ayant la capacité de générer des trajectoires à la volée pour tous les exosquelettes 1).

*Trajectoire*

Comme expliqué, on entend classiquement par « trajectoire » de l'exosquelette les évolutions de chaque degré de liberté (en particulier actionné, mais les degrés non actionnés peuvent intervenir dans les algorithmes de commande des autres degrés de liberté) exprimées en fonction du temps ou d'une variable de phase. Dans la suite de la présente description, par « position » de l'exosquelette 1 on entendra les positions articulaires des degrés de liberté actionnés, qui sont avantageusement au nombre de six par jambe, soit une position définie par un vecteur de dimension 12, même si l'on pourrait par exemple prendre la position cartésienne d'un point caractéristique de l'exosquelette, par exemple son Centre de Masse (CoM - on a lors un vecteur de dimension 3 correspondant aux 3 positions selon les 3 axes).

Par ailleurs, on sait définir un mouvement « complexe » comme une séquence de trajectoires dites « élémentaires » le cas échéant entrecoupées de transitions. Par trajectoire élémentaire, on entend le plus souvent une trajectoire correspondant à un pas, i.e. appliquée sur la durée du pas de sorte que partant d'un état initial de l'exosquelette 1 au début d'un pas (moment de contact du pied), on arrive au début du pas suivant. A noter qu'on a une alternance de pas gauche et pas droit, et par exemple pour une marche il faut techniquement deux pas pour retourner exactement dans le même état (même pied devant). On appelle trajectoire périodique une succession stable de trajectoires élémentaires permettant une marche, mais comme expliqué le présent procédé s'applique à toute mise en mouvement.

Cela englobe toute marche à plat, mais également sur rampe, une montée ou descente d'un escalier, pas de côté, pas tournant, etc.

Une trajectoire élémentaire est associée à une marche donnée de l'exosquelette 1 (une marche étant définie par un n-uplet de paramètres de marche), et permet de maintenir cette marche de manière stable et faisable (i.e. comme on le verra respecte toutes les contraintes d'un problème d'optimisation et minimise autant que possible une fonction de coût). Comme expliqué, lesdits paramètres de marche correspondent à des « caractéristiques » de la façon de marcher, telles que la longueur des pas, la fréquence de marche et l'inclinaison du buste, mais également hauteur des marches en cas de franchissement d'escaliers, l'angle de rotation instantané pour les mouvements courbes ; et également à des caractéristiques morphologiques de l'opérateur (un sous-groupe des paramètres de marche dits paramètres patient) telles que sa taille, son poids, la longueurs des cuisses ou des tibia, la position du centre de masse (valeur du décalage vers l'avant) et le débattement latéral du buste dans le cadre d'activité de rééducation.

Lesdites « contraintes » d'une marche évoquées ci-avant peuvent être variées et dépendre du type de marche souhaitée, par exemple une marche « pied plat », ou « avec déroulé », etc. Le présent procédé ne sera limité à aucun type de marche souhaité.

Les éventuelles transitions correspondent à des changements de marche, i.e. des variations de valeurs desdits paramètres de marche (par exemple une augmentation de la longueur de pas) : connaissant un jeu initial de paramètres de marche et un jeu final de paramètres de marche, et donc une trajectoire périodique initiale (associée au jeu initial de paramètres de marche) et une trajectoire périodique finale (associée au jeu final de paramètres de marche), ladite transition est un fragment de trajectoire permettant de passer de la trajectoire périodique initiale à la trajectoire finale. On note qu'il faut y avoir des transitions « initiale » ou « finale », correspondant à des démarrage et fin du mouvement.

*Contrôle en admittance*

Pour pouvoir marcher en toute sécurité y compris sur des sols irréguliers, l'exosquelette a besoin d'un « stabilisateur », i.e. un contrôleur dynamique appliquant la trajectoire tout en s'assurant de l'équilibre de l'exosquelette 1.

Une méthode dite de « contrôle en admittance » s'est prouvée efficace pour la stabilisation de la marche de robots humanoïdes, comme illustré par exemple dans le document Stéphane Caron, Abderrahmane Kheddar and Olivier Tempier, Stair Climbing Stabilization of the HRP-4 Humanoid Robot using Whole-body Admittance Control.

Le contrôle en admittance consiste à estimer à tout instant l'état du robot, à mesurer sa déviation par rapport à la trajectoire de référence, calculer un torseur d'effort stabilisant et appliquer cet effort sur le système via contrôle des positions articulaires, sous la forme d'une boucle de stabilisation.

En particulier, ladite déviation par rapport à la trajectoire de référence s'évalue sur la base d'une grandeur appelée Composante divergente du mouvement (Divergent-component of Motion, DCM) ou capture-point, définie par l'équation $\xi = c + \dot{c}/\omega$, où c est la position du Centre de Masse (CoM) et $\omega = \sqrt{g/h}$ la fréquence du Modèle Linéaire de Pendule Inversé (Linear-Inverted Pendulum model, LIPM), avec g la constante de gravité et h la hauteur du CoM, qu'on peut supposer constante.

Ce DCM permet de décomposer l'équation du second ordre $\ddot{c} = \omega^2(c - z)$ du LIPM (dans lequel on considère seulement les 2 composantes horizontales), où z est la position du ZMP, en deux systèmes du $1^{er}$ ordre couplés :

$$\dot{\xi} = \omega(\xi - z)$$

$$\dot{c} = \omega(\xi - c)$$

La $1^{ère}$ équation montre que le DCM diverge naturellement du ZMP (d'où le nom « divergent ») alors que la $2^e$ équation montre que le CoM converge vers le DCM.

Un contrôle de rétroaction sur le DCM (DCM control feedback) permet ainsi calculer ledit torseur d'effort stabilisant à appliquer, et diverses stratégies d'admittance dites « whole-body admittance » (le document Stéphane Caron, Abderrahmane Kheddar and Olivier Tempier, Stair Climbing Stabilization of the HRP-4 Humanoid Robot using Whole-body Admittance Control donne les exemples de l'admittance de cheville, l'admittance du CoM ou la différence de force entre les pieds) permettent de déterminer des consignes cinématiques à réaliser pour que l'effort voulu soit appliqué (en utilisant une cinématique inverse en général).

Cette possibilité d'amélioration de la stabilité de la marche était susceptible de rendre la marche des exosquelettes plus stable sur sol régulier et de leur permettre de marcher et se déplacer dans des environnements dont le sol est irrégulier, mais l'application du contrôle en admittance aux exosquelettes s'est avérée décevante.

En effet, dans sa forme, dans sa forme initiale telle que décrite par le document Stéphane Caron, Abderrahmane Kheddar and Olivier Tempier, Stair Climbing Stabilization of the HRP-4 Humanoid Robot using Whole-body Admittance Control, la méthode de contrôle en admittance est peu robuste. Plus précisément, l'exosquelette fait des pas plus petits que prévu, traîne des pieds, voire vibre, et la démarche n'est ni confortable pour l'opérateur ni exempte de danger.

Cela est du au fait que l'exosquelette 1 ne peut pas être considéré comme un « robot rigide » au même titre que le HRP-4 dans le document susmentionné, c'est-à-dire un système articulé dont la dynamique peut être suffisamment bien décrite par les équations classiques de la robotique rigide.

C'est ce que l'on appelle le « reality gap » des exosquelettes, et il tient en deux grands points :

- L'opérateur dans l'exosquelette 1 est lui-même une source de perturbations, potentiellement importantes ;
- Des parties de l'exosquelette sont déformables (en particulier cheville et/ou hanche), ce qui se traduit notamment par le fait que le pied en l'air (dit swing foot) est généralement plus bas que prévu et donc touche le sol anormalement tôt.

Le présent procédé résout très astucieusement ces difficultés en proposant un contrôle d'admittance modifié prenant en compte un modèle de flexibilité de l'exosquelette 1 par rapport à un robot rigide, et les tests suivants ont été réussis avec succès :

- Marche autonome de l'exosquelette 1 recevant un mannequin passif et résistant à de fortes perturbations extérieures (poussées latérales, etc.) ;
- Marche autonome de l'exosquelette 1 recevant un opérateur humain sur un sol irrégulier qu'est une rue pavée de profil bombé ;
- Marche autonome de l'exosquelette 1 recevant un mannequin passif sur un tapis roulant pendant une longue durée (1000 pas).

*Procédé*

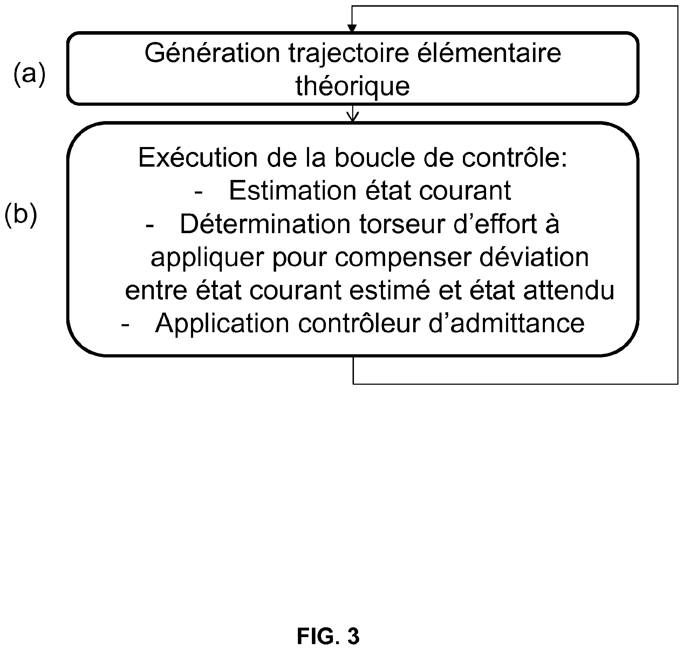

En référence à la **Figure 3,** ledit procédé de mise en mouvement de l'exosquelette 1, mis en oeuvre par les moyens de traitement de données 11c embarqués, commence par une étape (a) d'obtention d'une trajectoire élémentaire théorique de l'exosquelette, correspondant par exemple à un pas. Cette étape peut comprendre l'obtention préalable d'au moins un n-uplet de paramètres de marche définissant une marche donnée de l'exosquelette 1, voire une séquence de n-uplets de paramètres de marche progressivement changés (par exemple du fait de nouvelles commandes de la part de l'opérateur de l'exosquelette, notamment si la nature du sol change).

A noter que l'obtention peut comme expliqué impliquer directement la génération de la trajectoire par l'exosquelette 1 (si par exemple il embarque le serveur 10a) ou bien la simple réception de la trajectoire par le réseau 20. A ce titre les moyens 11c peuvent fournir au serveur 10a externe les paramètres de marche, et récupérer en retour la trajectoire.

L'opérateur peut être muni comme expliqué d'un gilet de capteurs 15 permettant de détecter la configuration de son buste (orientation de celui-ci). La direction dans laquelle l'opérateur oriente son buste est celle dans laquelle il souhaite marcher et la vitesse peut être donnée par l'intensité avec laquelle il met son buste en avant (à quel point il se penche). La requête de démarrage peut correspondre à l'appui par l'opérateur sur un bouton (ou une posture particulière) signifiant son intention de se mettre en marche et donc ordonnant aux moyens de traitement de données de déterminer lesdits paramètres. Certains paramètres tels que l'angle de rotation instantané ou la hauteur des marches en cas de franchissement d'escaliers peuvent être prédéterminés ou obtenus au moyen d'autres capteurs 13, 14.

Pour la génération de la trajectoire à proprement parler, on ne sera limité à aucune technique connue. On connait notamment comme expliqué des outils d'optimisation, capables notamment de générer une trajectoire donnée en fonction des contraintes et paramètres de marches choisis. Par exemple, dans le cas de trajectoires HZD, le problème de la génération de trajectoires est formulé sous la forme d'un problème de contrôle optimal qui peut être résolu de manière préférée par un algorithme dit de collocation directe, voir le document Omar Harib et al., Feedback Control of an Exoskeleton for Paraplégies Toward Robustly Stable Hands-free Dynamic Walking.

On pourra alternativement comme expliqué également utiliser un réseau de neurones entraîné sur une base de données de trajectoires d'apprentissage.

Dans tous les cas, on supposera défini une position initiale de l'exosquelette 1 correspondant à sa position au début du pas.

La trajectoire élémentaire générée est dite « théorique », par opposition à une trajectoire « réelle ». En effet, dans un monde exempt de toute perturbation, on pourrait simplement appliquer la trajectoire théorique et l'exosquelette marcherait automatiquement conformément à cette trajectoire.

Ici, on suppose que des perturbations sont possibles, aussi bien du fait du caractère irrégulier du sol que du comportement de l'opérateur ou bien des actions extérieures, de sorte que la trajectoire qui est en pratique effectuée par l'exosquelette 1 (la trajectoire réelle) ne correspond jamais exactement à la trajectoire théorique prévue, même si comme on verra le présent procédé fait qu'elles resteront proches.

Ensuite, dans une étape (b) principale, le procédé comprend l'exécution d'une boucle de contrôle définissant l'évolution d'une position réelle de l'exosquelette 1 de sorte à mettre en oeuvre ladite trajectoire élémentaire réelle voisine de ladite trajectoire élémentaire théorique, i.e. de sorte à ce que l'exosquelette 1 marche.

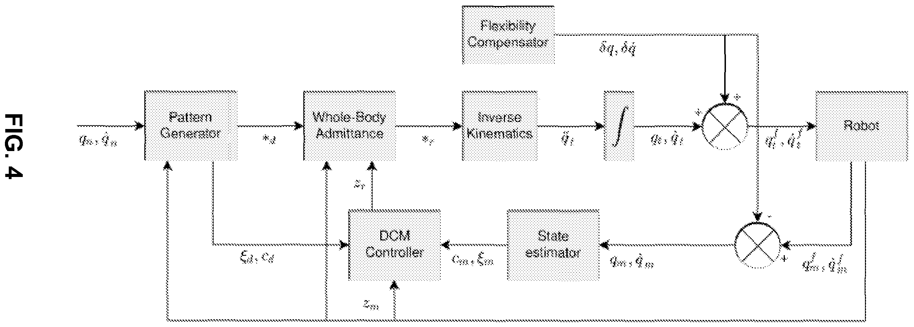

Il s'agit comme expliqué d'un contrôle en admittance, prenant la forme d'une boucle itérée, donc un mode de réalisation particulièrement préféré est représenté par la **Figure 4.**

L'exécution de la boucle de contrôle en admittance comprend de manière connue à chaque itération de la boucle :

- l'estimation (par un estimateur d'état) d'un état courant de l'exosquelette 1 en fonction de ladite position réelle ;
- la détermination (typiquement par un contrôleur de DCM) d'un torseur d'effort à appliquer à l'exosquelette 1 à l'itération suivante de la boucle pour compenser une déviation entre ledit état courant estimé de l'exosquelette 1 et un état attendu de l'exosquelette 1 conformément à ladite trajectoire élémentaire théorique ;
- Et avantageusement l'application (par un contrôleur d'admittance) à l'exosquelette 1 à l'itération suivante de la boucle dudit torseur d'effort déterminé via contrôle des positions articulaires ;

mais la détermination du torseur d'effort et/ou son application à l'exosquelette 1 prend en compte un modèle de flexibilité de l'exosquelette 1 par rapport à un robot rigide.

Par état (courant ou attendu) de l'exosquelette 1, on entend au moins un paramètre choisi parmi les positions, vitesses et accélérations des degrés actionnés, position et vitesse du Centre de Masse (CoM), de la composante divergente de mouvement (DCM), la position du Centre de Pression (CoP), la position du Point de moment zéro (ZMP) ; en particulier les trois paramètres que sont les positions du Centre de Masse (CoM), de la composante divergente de mouvement (DCM) et Centre de Pression (CoP). A noter qu'en pratique on suppose que le COP et le ZMP coïncident (ce qui est cas lorsque le sol est sensiblement horizontal, même si irrégulier). Ainsi, dans la suite de la présente description, on utilise la notation z pour désigner l'un ou l'autre, et on parlera par commodité de CoP. Dans la mesure où l'on a un état courant estimé et un état attendu, on a pour chaque paramètre une version courante et une version attendue.

L'état courant est l'état réel « mesurable » de l'exosquelette 1 correspondant à la trajectoire réelle effectuée. En l'espèce chacun de ses paramètres est soit directement mesuré (en particulier positions des degrés actionnés et CoP), soit estimé par le bloc « state estimator » de la figure 4 à partir des paramètres directement mesurés (en particulier CoM et DCM). Les positions estimées du CoM, du DCM et du CoP sont respectivement notées $c_m$, $\xi_m$, et $z_m$, comme expliqué le DCM est en pratique directement calculé à partir du CoM.

L'état attendu est l'état théorique « désiré » que l'exosquelette 1 devrait prendre si la trajectoire théorique était appliquée telle quelle, déterminé par le bloc « pattern generator » de la figure 4. Les positions attendues du CoM, du DCM et du CoP sont respectivement notées $c_d$, $\xi_d$ et Zd.

De manière particulièrement préférée, le DCM courant $\xi_m$ n'est pas estimé uniquement avec le CoM courant $c_m$, mais en ce qui concerne la vitesse du CoM, avec sa valeur cible, i.e. celle appliquée à l'itération précédente $\dot{c}_t$. En d'autres termes, on n'a pas $\xi_m = c_m + \dot{c}_m/\omega$ mais $\xi_m = c_m + \dot{c}_t/\omega$. En effet la valeur cible est plus lissée tout en ayant la même moyenne, et se comporte comme un filtre améliorant le résultat.

Ensuite, la détermination du torseur d'effort à appliquer à l'exosquelette 1 à l'itération suivante de la boucle pour compenser la déviation entre lesdits états courant et attendu de l'exosquelette 1 comprend avantageusement la mise en oeuvre d'un contrôle de rétroaction (« feedback », avantageusement de type PID) sur au moins un des dits paramètres définissant l'état de l'exosquelette, en particulier le DCM, i.e. constitue un contrôleur de DCM (bloc « DCM control feedback » dans la figure 4).

De manière préférée, ledit torseur d'effort à appliquer à l'exosquelette 1 est défini comme une position du Centre de Pression (CoP) et/ou du Point de moment zéro (ZMP). A nouveau on suppose en pratique que le COP et le ZMP coïncident. On comprend qu'on a potentiellement trois occurrences du CoP : comme paramètre de l'état courant estimé (dit CoP courant), comme paramètre de l'état attendu (dit CoP attendu), et comme paramètre définissant le ledit torseur d'effort à appliquer (dit CoP de référence).

De manière particulièrement préféré, le ledit torseur d'effort à appliquer à l'exosquelette 1 est déterminé grâce à la formule :

$$z = z_d - \left(1 + \frac{K_p}{\omega}\right) e_\xi - K_i \int e_\xi + \frac{K_d}{\omega} e_z$$

Où $z_d$ est la position attendue du CoP conformément à ladite trajectoire élémentaire théorique (calculée par le bloc « Pattern Generator » et fournie directement au contrôleur d'admittance (le bloc « Whole-Body Admittance ») qui va appliquer cet effort), $e_\xi$ et $e_z$ les erreurs entre les CoP et DCM courants estimés et attendus, et $K_p$, $K_i$ et $K_d$ des gains (réglables).

Cette formule s'avère très performante pour les exosquelettes 1 recevant un opérateur humain.

En pratique le contrôleur de DCM (bloc DCM feedback controller) fournit les deux derniers termes de « compensation de la déviation » au contrôleur d'admittance (bloc Whole-Body Admittance), constituant le CoP de référence noté $z_r$ dans la figure 4.

Chaque itération de la boucle comprend avantageusement comme expliqué l'application dudit torseur d'effort à l'exosquelette 1 (en début de boucle), au moyen du contrôleur d'admittance en lui-même (le bloc Whole-Body Admittance), lequel génère en particulier des consignes cinématiques dites de référence (par contraste avec les consignes cinématiques attendues générées à partir de la trajectoire théorique), lesquelles peuvent être le cas échéant converties en positions/vitesses à appliquer (dites cibles) des degrés actionnés en utilisant par exemple une cinématique inverse et une intégration (si la cinématique inverse donne les accélérations). A noter que l'éventuelle cinématique inverse peut comprendre différentes tâches hiérarchisées (par exemple pieds, CoM, pelvis puis posture), selon la méthode d'admittance utilisée.

Le contrôleur d'admittance met en effet en oeuvre une méthode ad-hoc telle que l'admittance de cheville (changer la position articulaire de la cheville pour appliquer la force), l'admittance du CoM (demander un déplacement du centre de masse), la différence de force entre les pieds (quand on est en double support, lever ou baisser les pieds, en utilisant des capteurs de force sous les pieds), ou toute autre stratégie de changement de consigne en position pour contrôler les forces.

Par exemple la stratégie CoM consiste en calculer la cinématique inverse en boucle ouverte (feed-forward) en utilisant la formule $\ddot{c} = \ddot{c}_d + A_c(z_m - z) = \ddot{c}_d + A_c\left(z_m - z_d + \left(1 + \frac{K_p}{\omega}\right) e_\xi + K_i \int e_\xi - \frac{K_d}{\omega} e_z\right)$, où $z_m$ est le CoP courant estimé (i.e. celui de l'état courant, potentiellement mesuré directement) et $A_c$ le gain du contrôle en admittance.

De manière générale, l'homme du métier pourra consulter le document Stéphane Caron, Abderrahmane Kheddar and Olivier Tempier, Stair Climbing Stabilization of the HRP-4 Humanoid Robot using Whole-body Admittance Control pour mettre en oeuvre cette boucle de contrôle.

*Compensation de flexibilité*

Comme expliqué, la détermination du torseur d'effort et/ou son application à l'exosquelette 1 prend en compte un modèle de flexibilité de l'exosquelette 1 par rapport à un robot rigide, c'est-à-dire ici un robot bipède classique ne recevant pas d'opérateur humain, et pouvant ainsi être considéré comme un système isolé. L'opposition entre robotique rigide et robotique flexible (ou « molle ») est bien connue de l'homme du métier et ces termes ont un sens bien défini.

L'idée est de considérer l'exosquelette 1 comme « flexible », de le modéliser au moyen d'un modèle, et d'appliquer ce modèle soit lors de la détermination du torseur d'efforts à appliquer à l'exosquelette, soit lors de ladite application du torseur d'effort à l'exosquelette. C'est une correction boucle ouverte (feed-forward), les valeurs des paramètres (consignes articulaires) sont juste modifiées, c'est-à-dire corrigées (on prend en compte leur valeur initiale) ou directement remplacées.

A noter qu'il a été tenté un contrôle rétroactif de la position des pieds pour tenir compte des flexibilités, mais cela s'était avéré contreproductif et malgré la précision de l'observateur cela créait plus d'instabilité qu'autre chose. Le fait d'appliquer directement le modèle en feed-forward avant ou après le contrôle en admittance résout toutes les difficultés.

On va à présent discuter plusieurs stratégies possibles d'application du modèle de flexibilités, qui peuvent être mises en oeuvre isolément ou en combinaison. Plus précisément, le modèle de flexibilités peut avoir plusieurs impacts dans la boucle de contrôle

1- Applications d'offsets sur les positions/vitesses cibles (i.e. celles générées par la cinématique inverse) d'au moins un degré actionné dit flexible (car sujet à de la flexibilité), en particulier cheville et/ou hanche, comme représenté sur la figure 4.

Comme on voit, un module « Flexibility compensator » génère les offsets et les ajoute aux valeurs cibles pour les corriger avant qu'elles soient envoyées aux actionneurs.

Ledit modèle qui permet de déterminer les offsets est avantageusement prédéterminé expérimentalement, à partir de marches réelles stables et/ou de simulations (par exemple grâce au simulateur Jiminy). Par exemple on commence par de la simulation de marches stables, puis on affine le modèle sur des marches réelles sur lesquelles la stabilité est éprouvée.

En particulier, ledit modèle de flexibilité modélise par exemple un degré actionné flexible comme un ressort, dont la raideur a été déterminé expérimentalement.

L'avantage de cette méthode est qu'elle est transparente pour le contrôleur en lui-même (puisque appliquée en sortie du contrôle d'admittance).

A noter que cette méthode peut également comprendre (ou non), comme représenté sur la figure 4, le retrait des offsets des positions mesurées pour annuler la compensation des flexibilités.

2- Modification du CoP

Dans cette stratégie, ledit modèle de flexibilité est appliqué de sorte à modifier la position attendue du CoP $z_d$, utilisée aussi bien par le contrôleur de DCM que par le contrôleur d'admittance.

En effet, il a été constaté que le CoP n'a pas besoin d'être totalement dynamiquement cohérent avec les autres paramètres dont le CoM.

On peut procéder de nombreuses façons, en filtrant le CoP attendu en fonction de ce qui est constaté sur des marches réelles, voire en prenant directement le COP attendu moyen (en position, vitesse ou accélération) constaté sur des marches réelles, voir méthode 3 juste après. Le modèle de flexibilité est alors un modèle de comportement « flexible » du CoP.

En particulier, une compensation de flexibilité peut être effectuée lors du changement de pied de contact (voir plus loin), en particulier si le pied de contact est changé plus tôt que prévu en raison d'un contact inattendu avec le sol (conséquence typique des flexibilités). Pour une plus grande stabilité et rapidité de calcul, un CoP modifié peut être calculé indépendamment des positions articulaires.

Par exemple le modèle de flexibilité peut prendre la forme d'un filtre du premier ordre qui peut être appliqué au CoP attendu. Lorsque le pied de contact est changé, le filtre fera varier naturellement le CoP attendu entre la valeur finale de la première étape et la valeur initiale de la deuxième étape, au lieu de changer brusquement.

De même, une stratégie MPC (Model Preview Control) peut être employée dans le même but. Cela présente l'avantage de permettre l'inclusion explicite de contraintes dans le CoP modifié.

Alternativement, toute autre stratégie de replanification en direct permettant une transition en douceur d'un pied à l'autre serait réalisable.

3- Remplacement par une valeur moyenne

Dans cette approche, au lieu de modéliser physiquement les flexibilités, on modélise leur impact durant la marche, sur tout ou partie des paramètres de l'état de l'exosquelette 1, y compris potentiellement le CoM, le DCM voire le CoP.

Ledit modèle de flexibilité défini ainsi au moins un paramètre de l'état de l'exosquelette à remplacer par une valeur moyenne constatée sur des marches réelles stables, ce remplacement étant préférentiellement directement en sortie du contrôleur d'admittance, avant cinématique inverse.

L'idée est d'utiliser directement des valeurs venant de marches dont on a déjà constaté la stabilité malgré les flexibilités. En effet, en tant qu'algorithme de stabilisation, la boucle à contrôleur d'admittance peut créer une « zone de stabilité » autour d'une marche déjà stable (éprouvée), ce qui permet une meilleure stabilité globale que lorsque l'on doit également effectuer le travail de stabilisation d'une marche de base instable.

*Enchainement de pas*

Les étapes (a) et (b) peuvent être répétées de sorte à faire marcher l'exosquelette 1 par une succession de trajectoires élémentaires réelles correspondantes chacune à un pas.

Il faut garder en tête que la trajectoire réelle est différente de la trajectoire théorique, de sorte qu'il faut adapter la trajectoire suivante au pas qui vient de se dérouler, a fortiori du fait des flexibilités qui causent un général un impact du pied plus tôt que prévu.

Ainsi, la trajectoire élémentaire théorique obtenue à l'étape (a) part d'une position initiale, l'étape (c) comprenant avantageusement la détermination d'une position finale de l'exosquelette 1 à la fin de ladite trajectoire élémentaire réelle, ladite position finale étant utilisée comme position initiale à l'occurrence suivante de l'étape (a).

Comme expliqué, généralement on génère une trajectoire périodique complète (constituée d'une suite de trajectoires élémentaires), de sorte que la nouvelle occurrence de l'étape (a) consiste à modifier la trajectoire périodique (pour la prochaine trajectoire élémentaire).

En d'autres termes, il y a donc une interpolation entre la position de l'exosquelette 1 au moment de l'impact et le pas suivant, afin d'éviter un saut des consignes. L'interpolation est réalisée au moment de l'impact, et modifie le début de la trajectoire du pas suivant.

*Equipements et système*

Selon un deuxième aspect, l'invention concerne l'exosquelette 1, pour la mise en oeuvre du procédé selon le premier aspect, et selon un troisième aspect le système comprenant l'exosquelette ainsi qu'un éventuel serveur 10a, possiblement confondus.

L'exosquelette 1 comprend des moyens de traitement de données 11c configurés pour la mise en oeuvre du procédé selon le deuxième aspect, ainsi que si nécessaire des moyens de stockage de données 12 (en particulier ceux du premier serveur 10a), des moyens de mesure inertielle 14 (centrale à inertie), des moyens pour détecter l'impact des pieds au sol 13 et le cas échéant estimer les forces de contact (capteurs de contact ou éventuellement capteurs de pression), et/ou un gilet de capteurs 15.

Il présente une pluralité de degrés de liberté dont au moins un degré de liberté actionné par un actionneur commandé par les moyens de traitement de données 11c pour l'exécution dudit contrôleur.

Le premier serveur 10a comprend des moyens de traitement de données 11a pour générer ladite trajectoire élémentaire théorique et la fournir à l'exosquelette à l'étape (a), en particulier sur réception de la position initiale de l'exosquelette 1 au démarrage pas et des éventuels paramètres de marche

*Produit programme d'ordinateur*

Selon un troisième et un quatrième aspects, l'invention concerne un produit programme d'ordinateur comprenant des instructions de code pour l'exécution (sur les moyens de traitement 11c), d'un procédé selon le premier aspect de de mise en mouvement d'un exosquelette 1, ainsi que des moyens de stockage lisibles par un équipement informatique sur lequel on trouve ce produit programme d'ordinateur.

**Revendications**

1. Procédé de mise en mouvement d'un exosquelette (1) bipède recevant un opérateur humain, le procédé comprenant la mise en oeuvre par des moyens de traitement de données (11c) de l'exosquelette (1), d'étapes de :

   (a) obtention d'une trajectoire élémentaire théorique de l'exosquelette (1) ;
   (b) exécution d'une boucle de contrôle définissant l'évolution d'une position réelle de l'exosquelette (1) de sorte à mettre en oeuvre une trajectoire élémentaire réelle voisine de ladite trajectoire élémentaire théorique, comprenant à chaque itération de la boucle :

   - Estimation d'un état courant de l'exosquelette (1) en fonction de ladite position réelle ;
   - Détermination d'un torseur d'effort à appliquer à l'exosquelette (1) à l'itération suivante de la boucle pour compenser une déviation entre ledit état courant estimé de l'exosquelette (1) et un état attendu de l'exosquelette (1) conformément à ladite trajectoire élémentaire théorique ;

   la détermination du torseur d'effort et/ou son application à l'exosquelette (1) prenant en compte un modèle de flexibilité de l'exosquelette (1) par rapport à un robot rigide.

2. Procédé selon la revendication 1, comprenant la répétition des étapes (a) et (b) de sorte à faire marcher l'exosquelette (1) par une succession de trajectoires élémentaires réelles correspondantes chacune à un pas.

3. Procédé selon la revendication 2, dans lequel la trajectoire élémentaire théorique obtenue à l'étape (a) part d'une position initiale, l'étape (b) comprenant la détermination d'une position finale de l'exosquelette (1) à la fin de ladite trajectoire élémentaire réelle, ladite position finale étant utilisée comme position initiale à l'occurrence suivante de l'étape (a).

4. Procédé selon l'une des revendications 1 à 3, dans lequel l'étape (b) comprend, au début de chaque itération de la boucle, l'application à l'exosquelette (1) dudit torseur d'effort déterminé à l'itération préalable au moyen d'un contrôleur d'admittance.

5. Procédé selon l'une des revendications 1 à 4, dans lequel la détermination d'un torseur d'effort à appliquer à l'exosquelette (1) pour compenser la déviation entre ledit état courant estimé de l'exosquelette (1) et un état attendu de l'exosquelette (1) conformément à ladite trajectoire élémentaire théorique comprend la mise en oeuvre d'un contrôle de rétroaction sur au moins un paramètre définissant l'état de l'exosquelette.

6. Procédé selon l'une des revendications 1 à 5, dans lequel la position de l'exosquelette (1) est définie par un vecteur des positions articulaires des degrés de liberté actionnés de l'exosquelette (1), l'état de l'exosquelette (1) étant défini par au moins un paramètre choisi parmi les positions, vitesses et accélérations des degrés actionnés, les positions et vitesses d'un Centre de Masse, CoM, d'une composante divergente de mouvement, DCM, la position d'un Centre de Pression, CoP, et la position d'un Point de moment zéro, ZMP ; en particulier défini par les positions du Centre de Masse, CoM, de la composante divergente de mouvement DCM et du Centre de Pression CoP.

7. Procédé selon les revendications 5 et 6 en combinaison, dans lequel ledit contrôle de rétroaction est mis en oeuvre sur la position du DCM.

8. Procédé selon l'une des revendications 6 et 7, dans lequel ledit torseur d'effort à appliquer à l'exosquelette 1 est défini par une position du CoP.

9. Procédé selon la revendication 7, dans lequel ledit torseur d'effort à appliquer à l'exosquelette 1 est déterminé en ajoutant à la position attendue du CoP conformément à ladite trajectoire élémentaire théorique au moins un terme sur l'erreur entre les positions courante estimée et attendue du CoP, et un terme sur l'erreur entre les positions courante estimée et attendue du DCM, en particulier conformément à la formule $z =$

$$z_d - \left(1 + \frac{K_p}{\omega}\right) e_\xi - K_i \int e_\xi + \frac{K_d}{\omega} e_z$$, où $z_d$ est la position attendue du CoP conformément à ladite trajectoire élémentaire théorique, $e_\xi$ et $e_z$ les erreurs entre les positions courante estimée et attendu respectivement du CoP et du DCM, et $K_p$, $K_i$ et $K_d$ des gains.

10. Procédé selon l'une des revendications 6 à 9, dans lequel ledit modèle de flexibilité définit une modification de la position attendue du CoP utilisée pour déterminer le torseur d'effort.

11. Procédé selon l'une des revendications 1 à 10, dans lequel l'exosquelette (1) présente au moins un degré de liberté actionné flexible, ledit modèle de flexibilité définissant un offset à appliquer sur une position et/ou une vitesse cible dudit degré de liberté actionné flexible déterminée suite à l'application du torseur d'efforts.

12. Procédé selon l'une des revendications 1 à 11, dans lequel ledit modèle de flexibilité définit au moins un paramètre de l'état de l'exosquelette (1) à remplacer par une valeur moyenne constatée sur des marches réelles stables.

13. Procédé selon l'une des revendications 1 à 12, dans lequel ledit modèle de flexibilité est prédéterminé expérimentalement, à partir de marches réelles stables et/ou de simulations.

14. Exosquelette (1) comprenant des moyens de traitement de données (11c) configurés pour mettre en oeuvre un procédé selon l'une des revendications 1 à 13 de mise en mouvement de l'exosquelette (1).

15. Système comprenant un serveur (10a) et l'exosquelette (1) selon la revendication 14, le serveur (10a) comprenant des moyens de traitement de données (11a) configurés pour générer ladite trajectoire élémentaire théorique et la fournir à l'exosquelette à l'étape (a).

16. Produit programme d'ordinateur comprenant des instructions de code pour l'exécution d'un procédé selon l'une des revendications 1 à 13 de mise en mouvement d'un exosquelette (1), lorsque ledit programme est exécuté sur un ordinateur.

17. Moyen de stockage lisible par un équipement informatique sur lequel un produit programme d'ordinateur comprend des instructions de code pour l'exécution d'un procédé selon l'une des revendications 1 à 13 de mise en mouvement d'un exosquelette (1).

**Patentansprüche**

1. Verfahren zum In-Bewegung-Setzen eines zweibeinigen Exoskeletts (1), das einen menschlichen Bediener aufnimmt, wobei das Verfahren das Umsetzen der folgenden Schritte durch Datenverarbeitungsmittel (11c) des Exoskeletts (1) umfasst:

   (a) Erzielen einer theoretischen elementaren Trajektorie des Exoskeletts (1);
   (b) Ausführen einer Steuerschleife, welche die Entwicklung einer tatsächlichen Position des Exoskeletts (1) definiert, um eine tatsächliche elementare Trajektorie umzusetzen, die zu der theoretischen elementaren Trajektorie benachbart ist, umfassend bei jeder Iteration der Schleife:

      - Schätzen eines aktuellen Zustands des Exoskeletts (1) gemäß der tatsächlichen Position;
      - Bestimmen eines Krafttorsors, der bei der folgenden Iteration der Schleife auf das Exoskelett (1) anzuwenden ist, um eine Abweichung zwischen dem geschätzten aktuellen Zustand des Exoskeletts (1) und einem erwarteten Zustand des Exoskeletts (1) gemäß der theoretischen elementare Trajektorie zu kompensieren;

   wobei die Bestimmung des Krafttorsors und/oder seine Anwendung auf das Exoskelett (1) ein Flexibilitätsmodell des Exoskeletts (1) im Verhältnis zu einem starren Roboter berücksichtigen.

2. Verfahren nach Anspruch 1, umfassend das Wiederholen der Schritte (a) und (b), um zu bewirken, dass das Exoskelett (1) durch eine Reihe von tatsächlichen elementaren Trajektorien, die jeweils einem Schritt entsprechen, geht.

3. Verfahren nach Anspruch 2, wobei die theoretische elementare Trajektorie, die in Schritt (a) erzielt wird, von einer Ausgangsposition ausgeht, wobei der Schritt (b) die Bestimmung einer Endposition des Exoskeletts (1) am Ende der tatsächlichen elementaren Trajektorie umfasst, wobei die Endposition als Anfangsposition beim nächsten Vorkommen von Schritt (a) verwendet wird.

4. Verfahren nach einem der Ansprüche 1 bis 3, wobei der Schritt (b) am Anfang jeder Iteration der Schleife die Anwendung auf das Exoskelett (1) des Krafttorsors, der in der vorhergehenden Iteration bestimmt wurde, mittels eines Admittanzsteuergeräts umfasst.

5. Verfahren nach einem der Ansprüche 1 bis 4, wobei die Bestimmung eines Krafttorsors, der auf das Exoskelett (1) anzuwenden ist, um die Abweichung zwischen dem geschätzten aktuellen Zustand des Exoskeletts (1) und einem erwarteten Zustand des Exoskeletts (1) gemäß der theoretischen elementaren Trajektorie zu kompensieren, das Umsetzen einer Rückkopplungssteuerung an mindestens einem Parameter, der den Zustand des Exoskeletts definiert, umfasst.

6. Verfahren nach einem der Ansprüche 1 bis 5, wobei die Position des Exoskeletts (1) durch einen Vektor der Gelenkpositionen der betätigten Freiheitsgrade des Exoskeletts (1) definiert wird, wobei der Zustand des Exoskeletts (1) durch mindestens einen Parameter definiert wird, der aus den Positionen, den Geschwindigkeiten und den Beschleunigungen der betätigten Grade, den Positionen und Geschwindigkeiten eines Massenmittelpunkts, CoM, einer divergenten Bewegungskomponente, DCM, der Position eines Druckmittelpunkts, CoP, und der Position eines Nullmomentpunkts, ZMP, gewählt wird; insbesondere durch die Positionen des Massenmittelpunkts, CoM, der divergenten Bewegungskomponente, DCM, und des Druckmittelpunkts, CoP, definiert wird.

7. Verfahren nach Anspruch 5 und 6 kombiniert, wobei die Rückkopplungssteuerung in der Position der DCM umgesetzt wird.

8. Verfahren nach einem der Ansprüche 6 und 7, wobei der Krafttorsor, der auf das Exoskelett (1) anzuwenden ist, durch eine Position des CoP definiert wird.

9. Verfahren nach Anspruch 7, wobei der Krafttorsor, der auf das Exoskelett (1) anzuwenden ist, bestimmt wird, indem zu der erwarteten Position des CoP gemäß der theoretischen elementaren Trajektorie mindestens ein Term für den Fehler zwischen der geschätzten und der erwarteten aktuellen Position des CoP und ein Term für den Fehler zwischen der geschätzten und der erwarteten aktuellen Position der DCM, insbesondere gemäß der Formel

$$z = z_d - \left(1 + \frac{K_p}{\omega}\right) e_\xi - K_i \int e_\xi + \frac{K_d}{\omega} e_z$$

hinzugefügt wird, wobei $z_d$ die erwartete Position des CoP gemäß der theoretischen elementaren Trajektorie ist, und $e_\xi$ und $e_z$ die Fehler zwischen der geschätzten und der erwarteten aktuellen Position jeweils des CoP und der DCM sind, und $K_p$, $K_i$ und $K_d$ Verstärkungen sind.

10. Verfahren nach einem der Ansprüche 6 bis 9, wobei das Flexibilitätsmodell eine Änderung der erwarteten Position des CoP definiert, die verwendet wird, um den Krafttorsor zu bestimmen.

11. Verfahren nach einem der Ansprüche 1 bis 10, wobei das Exoskelett (1) mindestens einen flexiblen betätigten Freiheitsgrad aufweist, wobei das Flexibilitätsmodell einen Versatz definiert, der auf eine angestrebte Position und/oder Geschwindigkeit des flexiblen betätigten Freiheitsgrads, die infolge der Anwendung des Krafttorsors bestimmt werden, anzuwenden ist.

12. Verfahren nach einem der Ansprüche 1 bis 11, wobei das Flexibilitätsmodell mindestens einen Parameter des Zustands des Exoskeletts (1) definiert, der durch einen Mittelwert zu ersetzen ist, der an stabilen tatsächlichen Schritten festgestellt wird.

13. Verfahren nach einem der Ansprüche 1 bis 12, wobei das Flexibilitätsmodell aus stabilen tatsächlichen Schritten und/oder aus Simulationen versuchsmäßig vorbestimmt wird.

14. Exoskelett (1), umfassend Datenverarbeitungsmittel (11c), die dazu konfiguriert sind, ein Verfahren nach einem der Ansprüche 1 bis 13 zum In-Bewegung-Setzen des Exoskeletts (1) umzusetzen.

15. System, umfassend einen Server (10a) und das Exoskelett (1) nach Anspruch 14, wobei der Server (10a) Datenverarbeitungsmittel (11a) umfasst, die dazu konfiguriert sind, die theoretische elementare Trajektorie zu generieren und sie dem Exoskelett in Schritt (a) bereitzustellen.

**16.** Computerprogrammprodukt, umfassend Codeanweisungen zum Durchführen eines Verfahrens nach einem der Ansprüche 1 bis 13 zum In-Bewegung-Setzen eines Exoskeletts (1), wenn das Programm auf einem Computer ausgeführt wird.

**17.** Speichermittel, das von einer Computereinrichtung lesbar ist, auf der ein Computerprogrammprodukt Codeanweisungen für die Ausführung eines Verfahrens nach einem der Ansprüche 1 bis 13 zum In-Bewegung-Setzen eines Exoskeletts (1) umfasst.

**Claims**

**1.** A method for setting in motion a biped exoskeleton (1) receiving a human operator, the method comprising the implementation, by data processing means (11c) of the exoskeleton (1), of steps of:

(a) obtaining a theoretical elementary trajectory of the exoskeleton (1);
(b) executing a control loop defining the evolution of an actual position of the exoskeleton (1) so as to implement an actual elementary trajectory similar to said theoretical elementary trajectory, comprising at each iteration of the loop:

- Estimation of a current state of the exoskeleton (1) as a function of said actual position;
- Determination of a wrench to be applied to the exoskeleton (1) at the next iteration of the loop to compensate for a deviation between said estimated current state of the exoskeleton (1) and an expected state of the exoskeleton (1) in accordance with said theoretical elementary trajectory;

the determination of the wrench and/or its application to the exoskeleton (1) taking into account a flexibility model of the exoskeleton (1) compared to a rigid robot.

**2.** The method according to claim 1, comprising the repetition of steps (a) and (b) so as to make the exoskeleton (1) walk through a succession of actual elementary trajectories each corresponding to a step.

**3.** The method according to claim 2, wherein the theoretical elementary trajectory obtained in step (a) starts from an initial position, step (b) comprising the determination of a final position of the exoskeleton (1) at the end of said actual elementary trajectory, said final position being used as the initial position on the next occurrence of step (a).

**4.** The method according to any of claims 1 to 3, wherein step (b) comprises, at the beginning of each iteration of the loop, the application to the exoskeleton (1) of said wrench determined at the prior iteration by means of an admittance controller.

**5.** The method according to any of claims 1 to 4, wherein the determination of a wrench to be applied to the exoskeleton (1) to compensate for the deviation between said estimated current state of the exoskeleton (1) and an expected state of the exoskeleton (1) in accordance with said theoretical elementary trajectory comprises the implementation of a feedback control on at least one parameter defining the state of the exoskeleton.

**6.** The method according to any of claims 1 to 5, wherein the position of the exoskeleton (1) is defined by a vector of the joint positions of the actuated degrees of freedom of the exoskeleton (1), the state of the exoskeleton (1) being defined by at least one parameter chosen from among the positions, velocities and accelerations of the actuated degrees, the positions and velocities of a Center of Mass CoM, of a divergent component of motion DCM, the position of a Center of Pressure CoP, and the position of a Zero Moment Point ZMP; particularly defined by the positions of the Center of Mass CoM, of the divergent component of motion DCM and of the Center of Pressure CoP.

**7.** The method according to claims 5 and 6 in combination, wherein said feedback control is implemented on the position of the DCM.

**8.** The method according to any of claims 6 and 7, wherein said wrench to be applied to the exoskeleton 1 is defined by a position of the CoP.

**9.** The method according to claim 7, wherein said wrench to be applied to the exoskeleton 1 is determined by adding to the expected position of the CoP in accordance with said theoretical elementary trajectory at least one term on the error between the estimated and expected current positions of the CoP, and one term on the error between the estimated and expected current positions of the DCM, particularly in accordance with the formula

$$z = z_d - \left(1 + \frac{K_p}{\omega}\right) e_\xi - K_i \int e_\xi + \frac{K_d}{\omega} e_z$$

, where $z_d$ is the expected position of the CoP in accordance with said theoretical elementary trajectory, $e_\xi$ and $e_z$ are the errors between the estimated and expected current positions of the CoP and of the DCM respectively, and $K_p$, $K_i$ and $K_d$ are gains.

10. The method according to any of claims 6 to 9, wherein said flexibility model defines a modification of the expected position of the CoP used to determine the wrench.

11. The method according to any of claims 1 to 10, wherein the exoskeleton (1) has at least one flexible actuated degree of freedom, said flexibility model defining an offset to be applied to a target position and/or velocity of said flexible actuated degree of freedom determined following the application of the wrench.

12. The method according to any of claims 1 to 11, wherein said flexibility model defines at least one parameter of the state of the exoskeleton (1) to be replaced by an average value observed on actual stable walking.

13. The method according to any of claims 1 to 12, wherein said flexibility model is predetermined experimentally, from actual stable walking and/or simulations.

14. An exoskeleton (1) comprising data processing means (11c) configured to implement a method according to any of claims 1 to 13 for setting in motion the exoskeleton (1).

15. A system comprising a server (10a) and the exoskeleton (1) according to claim 14, the server (10a) comprising data processing means (11a) configured to generate said theoretical elementary trajectory and provide it to the exoskeleton in step (a).

16. A computer program product comprising code instructions for the execution of a method according to any of claims 1 to 13 for setting in motion an exoskeleton (1), when said program is executed on a computer.

17. A storage means readable by a computer equipment on which a computer program product comprises code instructions for the execution of a method according to any of claims 1 to 13 for setting in motion an exoskeleton (1)

**FIG. 1**

**FIG. 2**

(a) — Génération trajectoire élémentaire théorique

(b) — Exécution de la boucle de contrôle:
- Estimation état courant
- Détermination torseur d'effort à appliquer pour compenser déviation entre état courant estimé et état attendu
- Application contrôleur d'admittance

**FIG. 3**

**FIG. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2497610 A1
- WO 2015140352 A
- WO 2015140353 A
- FR 1910649

**Littérature non-brevet citée dans la description**

- **T. GURRIET.** *Towards Restoring Locomotion for Paraplégies: Realizing Dynamically Stable Walking on Exoskeletons*
- **O. HARIB.** *Feedback Control of an Exoskeleton for Paraplégies: Toward Robustly Stable, Hands-Free Dynamic Walking*
- **CARON STEPHANE et al.** *Stair Climbing Stabilization of the HRP-4 Humanoid Robot using Whole-body Admittance Control*
- **LL ZHIJUN et al.** *Physical Human-Robot Interaction of a Robotic Exoskeleton By Admittance Control*
- **STÉPHANE CARON ; ABDERRAHMANE KHEDDAR ; OLIVIER TEMPIER.** *Stair Climbing Stabilization of the HRP-4 Humanoid Robot using Whole-body Admittance Control*
- **STÉPHANE CARON ; ABDERRAHMANE KHEDDAR ; OLIVIER TEMPIER.** *air Climbing Stabilization of the HRP-4 Humanoid Robot using Whole-body Admittance Control*
- **OMAR HARIB et al.** *Feedback Control of an Exoskeleton for Paraplégies Toward Robustly Stable Hands-free Dynamic Walking*